# EUROPÄISCHE PATENTSCHRIFT

(11) **EP 2 020 327 B1**
(45) Veröffentlichungstag und Bekanntmachung des Hinweises auf die Patenterteilung: **12.03.2014**
(21) Anmeldenummer: 08012832.5
(22) Anmeldetag: 16.07.2008
(51) Int. Cl.: B60K 11/08

(54) **Kühlmodul**
Cooling module
Module de refroidissement

(30) Priorität: 01.08.2007 DE 102007036475
(43) Veröffentlichungstag der Anmeldung: 04.02.2009
(73) Patentinhaber: Behr GmbH & Co. KG, 70469 Stuttgart (DE)
(72) Erfinder: Spieth, Michael, 72810 Gomaringen (DE); Harich, Martin, 25436 Heidegraben (DE); Pantow, Eberhard, 71364 Winnenden (DE)
(74) Vertreter: Grauel, Andreas

(56) Entgegenhaltungen:
- EP-A- 1 683 949
- DE-A1- 10 257 838
- US-A1- 2007 169 725

## Beschreibung

Die Erfindung betrifft ein Kühlmodul für ein Kraftfahrzeug, mit mindestens einem Kühler, der von Kühlmittel durchflossen wird, das insbesondere zur Kühlung eines Fahrzeugantriebs und Innenraums dient, und der von einer Kühlluftströmung durchströmt wird, die, in Abhängigkeit von der Geschwindigkeit des Kraftfahrzeugs, von mindestens einem Lüfter beeinflusst wird, der zwischen dem Kühler und einem Motorraum in beziehungsweise an einer Lüfterhaube angeordnet ist, die Öffnungen aufweist, die druckabhängig durch Staudruckklappen verschließbar sind, siehe EP1 683 949 A1.

In derartigen Kühlmodulen hat der Lüfter, der auch als Ventilator bezeichnet wird, die Aufgabe, den Kühler oder einen Teil des Kühlers mit einer ausreichenden Kühlluftmenge zu durchströmen, wenn der Fahrtwind, zum Beispiel bei langsamer Fahrt oder bei Stillstand des Fahrzeugs, nicht ausreicht. Während einer Langsamfahrt wird der für die Förderung der Kühlluftströmung nötige Druckaufbau von dem Lüfter bereitgestellt. Bei einer Schnellfahrt führt der Lüfter zu einem unerwünschten Druckverlust. In der Lüfterhaube können durch Staudruckklappen verschließbare Öffnungen vorgesehen sein, die bei Schnellfahrt und der damit verbundenen höheren Staudruckbeaufschlagung der Lüfterhaube mehr Luft durch das Kühlmodul strömen lassen.

Aufgabe der Erfindung ist es, die Durchströmung eines Kühlmoduls gemäß dem Oberbegriff des Anspruchs 1 mit Kühlluft in unterschiedlichen Betriebszuständen zu verbessern.

Die Aufgabe ist bei einem Kühlmodul für ein Kraftfahrzeug, mit mindestens einem Kühler, der von Kühlmittel durchflossen oder durchströmt wird, das insbesondere zur Kühlung eines Fahrzeugantriebs und Innenraums dient, und der von einer Kühlluftströmung durchströmt wird, die, in Abhängigkeit von der Geschwindigkeit des Kraftfahrzeugs, von mindestens einem Lüfter beeinflusst wird, der zwischen dem Kühler und einem Motorraum in beziehungsweise an einer Lüfterhaube angeordnet ist, die Öffnungen aufweist, die druckabhängig durch Staudruckklappen verschließbar sind, dadurch gelöst, dass die Lüfterhaube in einem lüfternahen Bereich mindestens einen staudruckklappenfreien, zum Beispiel geschlossenen, Haubenabschnitt aufweist und, dass der lüftemahe Bereich die Gestalt eines Kreisrings aufweist, der sich ringsum den Lüfter erstreckt. Der lüfternahe Bereich ist innen von einer Durchgangsöffnung begrenzt, in welchem der Lüfter angeordnet ist, und, dass der Abstand zwischen einem Innendurchmesser und einem Außendurchmesser des lüfternahen Bereichs so groß wie die Abmessungen einer der Staudruckklappen in der gleichen Richtung ist. Vorzugsweise ist der Abstand zwischen einem Innendurchmesser und einem Außendurchmesser etwas größer als die Abmessung der Staudruckklappen in der gleichen Richtung. In dem geschlossenen Haubenabschnitt wird, im Gegensatz zu herkömmlichen Kühlmodulen, bewusst auf Öffnungen verzichtet, die druckabhängig durch Staudruckklappen verschließbar sind. Dadurch können die Strömungsbedingungen verbessert werden. Außerdem können durch den bewussten Verzicht auf Staudruckklappen Herstellkosten eingespart werden. Das erfindungsgemäße Kühlmodul umfasst vorzugsweise mehrere Wärmetauscher beziehungsweise Kühlsysteme. Vorzugsweise kommen ein Lüfter oder zwei Lüfter zur Anwendung.

Ein weiteres bevorzugtes Ausführungsbeispiel des Kühlmoduls ist **dadurch gekennzeichnet, dass** der gesamte lüftemahe Bereich geschlossen ausgeführt ist. Dadurch wird das Strömungsverhalten verbessert.

Ein weiteres bevorzugtes Ausführungsbeispiel des Kühlmoduls ist **dadurch gekennzeichnet, dass** alle Staudruckklappen gleich ausgeführt sind. Vorzugsweise sind alle Staudruckklappen gleich groß und auch ansonsten gleich ausgeführt. Dadurch wird ein modularer Aufbau ermöglicht, der die Anpassung des erfindungsgemäßen Kühlmoduls an unterschiedliche Anforderungen und/oder Einbausituationen ermöglicht. Gleichzeitig werden die Herstellkosten gering gehalten.

Ein weiteres bevorzugtes Ausführungsbeispiel des Kühlmoduls ist **dadurch gekennzeichnet, dass** eine Vielzahl von gleichen Staudruckklappen in mehreren, insbesondere unterschiedlichen, Staudruckklappenfeldem angeordnet ist. Die Lage, die Form und/oder die Größe der Staudruckklappenfelder können beziehungsweise kann variieren.

Ein weiteres bevorzugtes Ausführungsbeispiel des Kühlmoduls ist **dadurch gekennzeichnet, dass** die Staudruckklappenfelder unterschiedlich groß sind. Vorzugsweise sind die Staudruckklappen eines Staudruckklappenfeldes in einer Reihe angeordnet.

Ein weiteres bevorzugtes Ausführungsbeispiel des Kühlmoduls ist **dadurch gekennzeichnet, dass** die Staudruckklappenfelder asymmetrisch in der Lüfterhaube angeordnet sind. Vorzugsweise sind die Staudruckklappenfelder auch asymmetrisch zu dem Lüfter angeordnet.

Ein weiteres bevorzugtes Ausführungsbeispiel des Kühlmoduls ist **dadurch gekennzeichnet, dass** jedes Staudruckklappenfeld einen Rahmen aufweist, der mehrere Öffnungen umfasst, die durch Staudruckklappen verschließbar sind. Vorzugsweise sind die Öffnungen innerhalb des Rahmens miteinander verbunden.

Ein weiteres bevorzugtes Ausführungsbeispiel des Kühlmoduls ist **dadurch gekennzeichnet, dass** der Rahmen einstückig mit der Lüfterhaube verbunden ist. Alternativ kann der Rahmen als separates Bauteil ausgeführt sein, das an der Lüfterhaube befestigt ist.

Ein weiteres bevorzugtes Ausführungsbeispiel des Kühlmoduls ist **dadurch gekennzeichnet, dass** die Staudruckklappen durch Schnappverbindungen schwenkbar an Scharnierachsen angebracht sind, die an dem Rahmen befestigt sind. Dadurch wird die Montage der Staudruckklappen erheblich vereinfacht. Die Scharnierachsen werden vorzugsweise von Bolzen gebildet, die an dem Rahmen befestigt sind.

Ein weiteres bevorzugtes Ausführungsbeispiel des Kühlmoduls ist **dadurch gekennzeichnet, dass** die Schnappverbindungen jeweils mindestens einen Schnapphaken umfassen, der von der zugehörigen Staudruckklappe ausgeht. Vorzugsweise gehen von jeder Staudruckklappe zwei Schnapphaken aus.

Ein weiteres bevorzugtes Ausführungsbeispiel des Kühlmoduls ist **dadurch gekennzeichnet, dass** die Staudruckklappen im geschlossenen Zustand überlappend aneinander anliegen. Das hat den Vorteil, dass auf Stege zwischen den einzelnen Staudrucköffnungen innerhalb eines Rahmens verzichtet werden kann. Dadurch kann die Versperrung der Luftströmung durch Stege reduziert werden.

Ein weiteres bevorzugtes Ausführungsbeispiel des Kühlmoduls ist **dadurch gekennzeichnet, dass** die Staudruckklappen relativ klein ausgeführt sind. Dadurch kann ein optimales Öffnungsverhalten realisiert werden, das sich nach den lokalen Druckverhältnissen richtet.

Ein weiteres bevorzugtes Ausführungsbeispiel des Kühlmoduls ist **dadurch gekennzeichnet, dass** die Abmessungen der Staudruckklappen etwa ein Sechstel bis ein Siebtel der Lüfterhaubenbreite betragen.

Ein weiteres bevorzugtes Ausführungsbeispiel des Kohlmoduls ist **dadurch gekennzeichnet, dass** die Staudruckklappen im Wesentlichen als ebene Platten ausgeführt sind. Dadurch können das Gewicht sowie der Aufwand bei der Konstruktion und Fertigung der Staudruckklappen gering gehalten werden. Die aerodynamischen Eigenschaften der Staudruckklappen sind mit denen eines Profils vergleichbar.

Ein weiteres bevorzugtes Ausführungsbeispiel des Kühlmoduls ist **dadurch gekennzeichnet, dass** die Staudruckklappen einen Anschlag aufweisen, durch den der Öffnungswinkel der Staudruckklappen begrenzt wird. Dadurch kann ein unerwünschtes Flattern der Staudruckklappen im Betrieb verhindert werden.

Ein weiteres bevorzugtes Ausführungsbeispiel des Kühlmoduls ist **dadurch gekennzeichnet, dass** der Öffnungswinkel der Staudruckklappen auf etwa 75 Grad begrenzt ist. Dadurch wird sichergestellt, dass die Staudruckklappen bei hohen Anströmungsgeschwindigkeiten stabil liegen. Die Reduktion des Luftmassenstroms durch die nicht vollständig geöffneten Staudruckklappen ist eher gering.

Ein weiteres bevorzugtes Ausführungsbeispiel des Kühlmoduls ist **dadurch gekennzeichnet, dass** der Lüfter außermittig in der Lüfterhaube angeordnet ist. Vorzugsweise ist nur ein einziger, leistungsfähiger Lüfter in der Lüfterhaube angeordnet. Gründe für die außermittige Lüfterpositionierung und die Verwendung von einem einzigen statt von zwei Lüftern sind in der folgenden ausführlichen Beschreibung aufgeführt.

Ein weiteres bevorzugtes Ausführungsbeispiel des Kühlmoduls ist **dadurch gekennzeichnet, dass** in einem lüfternahen Bereich feststehende Rückschlaglamellen beziehungsweise Rückschlaglamellenfelder angeordnet sind. Die Rückschlaglamellen sind vorzugsweise so ausgeführt, dass sie eine Durchströmung nur in einer Richtung zulassen. Eine Durchströmung in der anderen Richtung wird durch die Rückschlaglamellen verhindert.

Kühlmodul nach einem der vorhergehenden Ansprüche, **dadurch gekennzeichnet, dass** die Staudruckklappen (21-29;54,58) im Wesentlichen als ebene Platten ausgeführt sind.

Vorteilhaft ist, dass die Staudruckklappen einen Anschlag aufweisen, durch den der Öffnungswinkel der Staudruckklappen begrenzt wird.

Vorteilhaft ist, dass der Öffnungswinkel der Staudruckklappen auf etwa 75 Grad begrenzt ist.

Vorteilhaft ist, dass der Lüfter außermittig in der Lüfterhaube angeordnet ist.

Vorteilhaft ist, dass in einem lüfternahen Bereich feststehende Rückschlaglamellen beziehungsweise Rückschlaglamellenfelder angeordnet sind.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine schematische Darstellung eines Kühlmoduls mit einem Lüfter und einer Lüfterhaube;
- Figur 2: eine schematische Darstellung einer Lüfterhaube mit einem Lüfter im Schnitt;
- Figuren 3 bis 5: die Auftragung der Druckdifferenz über der Ausdehnung der Lüfterhaube in verschiedenen Fahrtzuständen;
- Figuren 6 und 7: zwei ähnliche Darstellungen wie in Figur 2 mit mehr Staudruckklappen;
- Figuren 8 bis 16: jeweils eine Lüfterhaube in der Draufsicht mit unterschiedlichen Staudruckklappenfeldern;
- Figur 17: ein kartesisches Koordinatendiagramm, in welchem die Druckdifferenz über dem Massenstrom in Form von verschiedenen Lüfterkennlinien aufgetragen ist;
- Figur 18: eine perspektivische Darstellung eines Ausschnitts eines Rahmens einer Lüfterhaube mit schwenkbar daran angebrachten Staudruckklappen;
- Figur 19: eine perspektivische Darstellung einer der Staudruckklappen aus Figur 18;
- Figur 20: eine schematische Darstellung einer Lüfterhaube mit einem Lüfter in der Draufsicht und im Schnitt gemäß einem weiteren Ausführungsbeispiel mit Rückschlaglamellen und
- Figuren 21 bis 25: jeweils eine Lüfterhaube in der Draufsicht mit unterschiedlichen Staudruckklappenfeldern und Rückschlaglamellenfeldem.

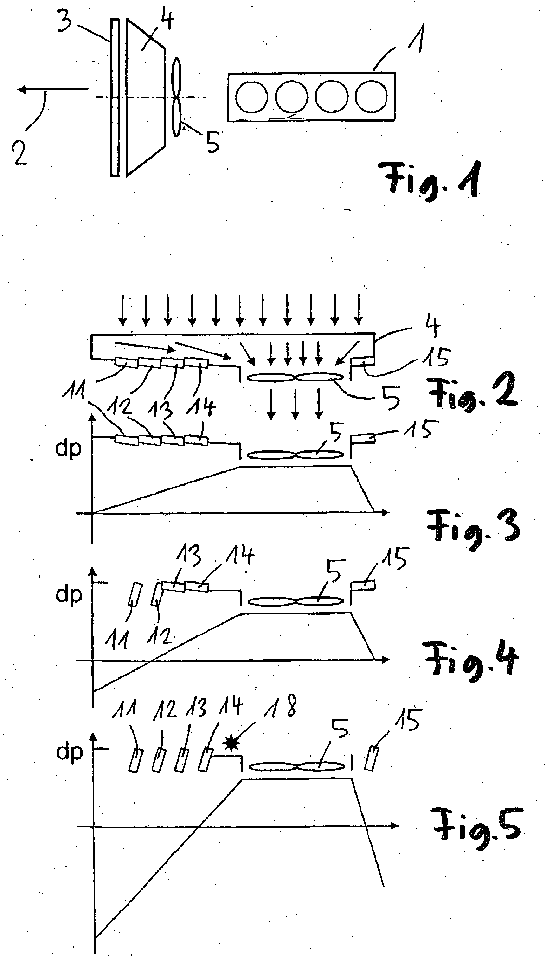

In Figur 1 ist ein Kühlmodul schematisch dargestellt. Das Kühlmodul ist allgemein für Fahrzeuge, zum Beispiel für Personenkraftwagen, Lastkraftwagen, Omnibusse und dergleichen, einsetzbar, die als Antriebsaggregat beispielsweise eine Brennkraftmaschine aufweisen. Das Kühlmodul ist ohne weiteres auch für Elektrofahrzeuge oder Hybridfahrzeuge geeignet.

Figur 1 zeigt eine Prinzipskizze des Kühlmoduls, das an einem Frontende eines Kraftfahrzeugs in einem Motorraum mit einem Motor 1 angeordnet ist. Beim Vorwärtsfahren bewegt sich das Fahrzeug in der Darstellung gemäß 1 von rechts nach links, wie durch einen Pfeil 2 angedeutet ist, der auch die Längsrichtung des Fahrzeugs definiert. Das Kühlmodul umfasst einen Kühler 3, eine Lüfterhaube 4 und einen Lüfter 5 und ist zwischen dem Motor 1 und dem Frontende des Fahrzeugs angeordnet.

An dem Frontende des Fahrzeugs ist mindestens eine Lufteintrittsöffnung vorgesehen, durch die dem Kühlmodul während der Fahrt des Fahrzeugs ein in im Wesentlichen horizontaler Richtung verlaufender Luftstrom zugeführt wird. Der Luftstrom, der auch als Kühlluftstrom oder Kühlluftströmung bezeichnet wird, gelangt durch die Lufteintrittsöffnung zu dem Kühler 3, der zur Kühlung eines Kühlmittels, zum Beispiel Wasser mit Zusätzen, des Motors 1 dient. Der Aufbau und die Funktion des Kühlers 3 sind allgemein bekannt, so dass hier nicht näher darauf eingegangen wird. Im Betrieb wird der Kühler 3 von dem über die Lufteintrittsöffnung zugeführten Luftstrom durchströmt. Dabei tritt der Luftstrom auf der Vorderseite des Kühlers 3 ein und auf der Rückseite des Kühlers 3 aus. Zusätzlich zu dem Kühler 3 können weitere Wärmetauscher vorgesehen sein.

In der Schnittdarstellung der Figur 2 sieht man, dass der Lüfter 5 durch die Lüfterhaube 4 eingefasst ist, die auch als Lüfterzarge bezeichnet wird. Die Lüfterhaube 4 dient dazu, die Luftströmung zu dem Lüfter 5 zu leiten. Bei dem Lüfter 5 handelt es sich vorzugsweise um einen Elektrolüfter. Außerhalb des Lüfters 5 sind in der Lüfterhaube 4 Staudruckklappen oder Staudruckklappenfelder 11 bis 15 vorgesehen, die Öffnungen in der Lüfterhaube 4 verschließen und in Abhängigkeit von einer Druckdifferenz dp freigeben. Durch Pfeile ist in Figur 2 die Luftströmung durch die Lüfterhaube 4 und den Lüfter 5 angedeutet. Hauptziel der Erfindung ist es, das Kühlmodul, das auch als Kühlmodul bezeichnet wird, unter allen Betriebsbedingungen optimal mit Kühlluft zu durchströmen, um eine ausreichende Kühlung des Motors und gegebenenfalls eine ausreichende Klimatisierung des Innenraums des Fahrzeugs sicherzustellen.

Im Betrieb des Fahrzeugs sind im Wesentlichen drei Betriebszustände mit unterschiedlichen Anforderungen an das Kühlmodul zu unterscheiden, und zwar: Leerlauf im Stand, geringere Fahrgeschwindigkeit und hohe Fahrgeschwindigkeit. Beim Leerlauf im Stand wird viel Luft für eine wirkungsvolle Klimatisierung benötigt und kann mangels Fahrtluft nur mit Hilfe des Lüfters gefördert werden. Bei geringen Fahrgeschwindigkeiten unter hoher Last wird für die Fahrzeugkühlung und den Kältekreislauf viel Kühlluft benötigt, die fast ausschließlich mit Hilfe des Lüfters gefördert werden kann. Der Einfluss von Staudruck ist bei niedrigen Geschwindigkeiten kaum vorhanden. Bei hohen Geschwindigkeiten wird ein Großteil der Kühlluft aufgrund des Staudrucks gefördert. Dabei wird der Lüfter, insbesondere bei einer Ausführung mit Zarge ohne Klappe, überblasen und trägt nur noch wenig zum gesamten Luftmassenstrom bei.

In den Figuren 3 bis 5 ist die Druckdifferenz dp für verschiedene Betriebszustände über der Ausdehnung der Lüfterhaube in horizontaler Richtung aufgetragen. In Figur 3 sieht man, dass bei langsamer Fahrt wenig oder kein Staudruck vorliegt, so dass die Staudruckklappen 11 bis 15 geschlossen sind. In Figur 4 sieht man, dass bei mittlerer Fahrzeuggeschwindigkeit die vom Lüfter 5 weiter entfernten Klappen 11 und 12 öffnen. Bei hoher Fahrgeschwindigkeit oder Fahrzeuggeschwindigkeit und demzufolge hohem Staudruck sind, wie man in Figur 5 sieht, alle Staudruckklappen 11 bis 15 geöffnet. Durch einen Stern 18 ist in Figur 5 angedeutet, dass in einem lüfternahen Bereich bewusst keine Staudruckklappe vorgesehen ist, da der Lüfter 5 in diesem lüfternahen Bereich noch so viel Druck aufbaut, dass eine Staudruckklappe keinen nennenswerten Nutzen bringen würde.
Ein wesentlicher Aspekt der vorliegenden Erfindung ist es, bei niedrigen Fahrzeuggeschwindigkeiten den zur Kühlung notwendigen Luftmassenstrom mit Hilfe des elektrisch angetriebenen Lüfters zur Verfügung zu stellen und bei hohen Geschwindigkeiten dafür zu sorgen, dass der durch Staudruck bedingte Luftmassenstrom möglichst wenig Widerstand erfährt. In den Geschwindigkeitsbereichen dazwischen, das heißt im so genannten Teillastbereich, soll das Kühlmodul beziehungsweise Kühlmodul auch optimal durchströmt werden. Aufgrund des Druckgefälles, das der Lüfter innerhalb der Lüfterhaube erzeugt, soll aber nicht der gesamte Staudruckklappenbereich auf einmal geöffnet werden, sondern durch Staudruckklappenteilbereiche ein sukzessives Öffnen von außen nach innen ermöglicht werden. Auf diese Art und Weise reicht schon ein kleines Druckgefälle für die Öffnung der Staudruckklappen eines Teilbereichs, bei dem dann mehr Luft durch den Kühler strömen kann.

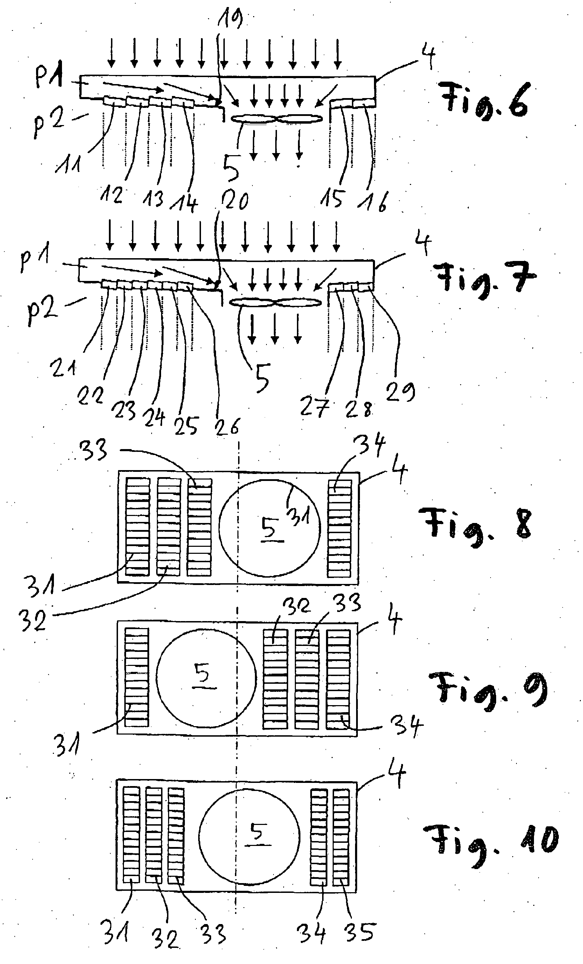

In den Figuren 6 und 7 sind ähnliche Lüfterhauben 4 wie in Figur 2 mit der durch Pfeile angedeuteten Luftströmung dargestellt. Des Weiteren sind in den Figuren 6 und 7 die unterschiedlichen Drücke p1 und p2 innerhalb und außerhalb der Lüfterhaube 4 bezeichnet. Bei der in Figur 6 dargestellten Lüfterhaube 4 ist zusätzlich zu den Staudruckklappen 11 bis 15 noch eine weitere Staudruckklappe 16 vorgesehen, also insgesamt sechs Staudruckklappen beziehungsweise Staudruckklappenfelder. Bei der in Figur 7 dargestellten Lüfterhaube 4 sind insgesamt neun Staudruckklappen beziehungsweise Staudruckklappenfelder 21 bis 29 im Schnitt sichtbar. Je feiner die horizontale Teilung der Staudruckklappen 11 bis 16; 21 bis 29 ist, umso differenzierter können sie auf den Druckunterschied beziehungsweise die Druckdifferenz p2 minus p1 reagieren.

In lüfternahen Bereichen kann bei eingeschaltetem Lüfter und bei hohen Geschwindigkeiten der Fall eintreten, dass der Lüfter aus diesen Bereichen noch soviel Luft ansaugt, dass die Staudruckklappen nicht öffnen oder das Öffnen einer relativ großen beziehungsweise breiten Klappe nicht möglich ist, weil sie sich symmetrisch auf dem Umschlagpunkt des Druckgefälles befindet. Unter anderem aus diesem Grund, sind auch bei den in den Figuren 6 und 7 dargestellten Lüfterhauben 4 in lüfternahen Bereichen 19 und 20 keine Staudruckklappen vorgesehen. Dadurch können ohne Leistungsverlust Kosten für unnötige Staudruckklappen eingespart werden.

In den Figuren 8 bis 16 sind unterschiedliche Ausführungsformen von Lüfterhauben 4 in der Draufsicht dargestellt. Dabei ist der Lüfter 5 jeweils nur durch einen Kreis 31 angedeutet. Außerhalb des Lüfters 5 sind in den verschiedenen Lüfterhauben 4 vier bis sechs Staudruckklappenfelder 31 bis 36 angeordnet. Allen Ausführungsbeispielen gemeinsam ist, dass ein einzelner, leistungsfähiger Lüfter 5 verwendet wird. Jedes der Staudruckklappenfelder 31 bis 36 umfasst mehrere in einer insbesondere vertikalen Reihe angeordnete Staudruckklappen. Die Position des Lüfters 5 sowie die Position und die Anzahl der Staudruckklappen beziehungsweise Staudruckklappenfelder sind an fahrzeugspezifische Strömungsbedingungen im Motorraum von verschiedenen Kraftfahrzeugen angepasst. Wesentliche Kriterien zur Bestimmung einer optimalen Lüfterposition sind unter anderem das Package, das heißt die Anordnung von Aggregaten oder anderen Bauteilen hinter dem Lüfter, die Abströmung hinter dem Lüfter, die Homogenität der Luftmassenstromverteilung über die Kühlmittelkühler-Fläche sowie der Abstand des Lüfters vom seitlichen Rand des Kühlers. Bei allen Ausführungsbeispielen ist der Lüfter 5 außermittig, aber nicht ganz am Rand der Lüfterhaube angeordnet. Darüber hinaus sind die Staudruckklappenfelder 31 bis 36 bei allen Ausführungsbeispielen asymmetrisch angeordnet.

In Figur 8 sind links vom Lüfter 5 drei Staudruckklappenfelder 31 bis 33 vorgesehen. Rechts vom Lüfter 5 ist nur ein Staudruckklappenfeld 34 vorgesehen. Alle Staudruckklappenfelder 31 bis 34 sind gleich ausgeführt, wobei jeweils dreizehn Staudruckklappen in Reihe angeordnet sind. Der Lüfter 5 ist zum Großteil in der rechten Hälfte der Lüfterhaube 4 angeordnet.

Bei dem in Figur 9 dargestellten Ausführungsbeispiel ist der Lüfter 5 zum großen Teil in der linken Hälfte der Lüfterhaube 4 angeordnet. Links von dem Lüfter 5 ist nur ein Staudruckklappenfeld 31 vorgesehen. Rechts vom Lüfter 5 sind drei Staudruckklappenfelder 32 bis 34 angeordnet. Alle Staudruckklappenfelder 31 bis 34 sind gleich ausgeführt und umfassen jeweils dreizehn Staudruckklappen in Reihe.
Bei dem in Figur 10 dargestellten Ausführungsbeispiel ist der Lüfter 5 nur leicht außermittig nach rechts verschoben angeordnet. Links vom Lüfter 5 sind drei Staudruckklappenfelder 31 bis 33 vorgesehen. Rechts vom Lüfter 5 sind zwei Staudruckklappenfelder 34, 35 vorgesehen. Alle Staudruckklappenfelder 31 bis 35 sind gleich ausgeführt und umfassen jeweils dreizehn Staudruckklappen in Reihe. Allerdings sind die Staudruckklappen der Staudruckklappenfelder 31 bis 35 bei dem in Figur 10 dargestellten Ausführungsbeispiel nicht so breit ausgeführt wie bei den vorangegangenen Ausführungsbeispielen.

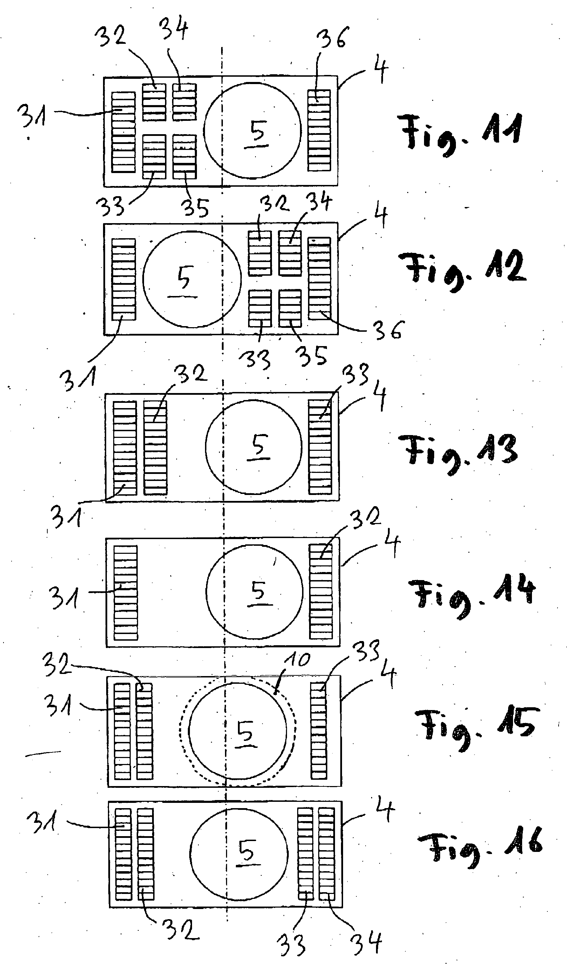

Bei den in den Figuren 11 und 12 dargestellten Ausführungsbeispielen ist der Lüfter 5 entweder zum großen Teil in der rechten Hälfte oder in der linken Hälfte der Lüfterhaube 4 angeordnet. Aus diesem Grund ist auf einer Seite jeweils nur ein Staudruckklappenfeld 36, 31 vorgesehen. Auf der anderen Seite sind dagegen fünf Staudruckklappenfelder 31 bis 35; 32 bis 36 vorgesehen. Dabei sind jeweils vier Staudruckklappenfelder 32 bis 35 gleich ausgeführt und im Viereck angeordnet. Die Staudruckklappenfelder 32 bis 34 umfassen jeweils fünf Staudruckklappen in Reihe. Dagegen umfassen die Staudruckklappenfelder 31 und 36 jeweils elf Staudruckklappen in Reihe.

Bei den in den Figuren 13 und 14 dargestellten Ausführungsbeispielen ist der Lüfter 5 jeweils zum großen Teil in der rechten Hälfte der Lüfterhaube 4 angeordnet. Daher ist rechts vom Lüfter 5 jeweils nur ein Staudruckklappenfeld 33; 32 angeordnet. Links vom Lüfter 5 sind bei dem in Figur 13 dargestellten Ausführungsbeispiel zwei Staudruckklappenfelder 31, 32 vorgesehen. Bei dem in Figur 14 dargestellten Ausführungsbeispiel ist links vom Lüfter 5 nur ein Staudruckklappenfeld 31 vorgesehen.

Bei dem in Figur 15 dargestellten Ausführungsbeispiel ist der Lüfter 5 nur leicht außermittig nach rechts verschoben. Links vom Lüfter 5 sind zwei Staudruckklappenfelder 31, 32 angeordnet. Rechts vom Lüfter 5 ist ein Staudruckklappenfeld 33 angeordnet. Die Staudruckklappenfelder 31 bis 33 sind gleich ausgeführt und umfassen jeweils dreizehn Staudruckklappen in Reihe. In Figur 15 ist außerhalb des Lüfters 5 ein lüfternaher Bereich durch einen gestrichelten Kreis begrenzt. In dem lüfternahen Bereich 10 ist keine Staudruckklappe angeordnet. Die Staudruckklappenfelder 32 und 33 sind relativ weit von dem Lüfter 5 beabstandet.

Bei dem in Figur 16 dargestellten Ausführungsbeispiel ist der Lüfter 5 genauso angeordnet wie bei dem vorangegangenen Ausführungsbeispiel. Im Unterschied zu dem vorangegangenen Ausführungsbeispiel sind rechts vom Lüfter 5 zwei Staudruckklappenfelder 33, 34 vorgesehen.

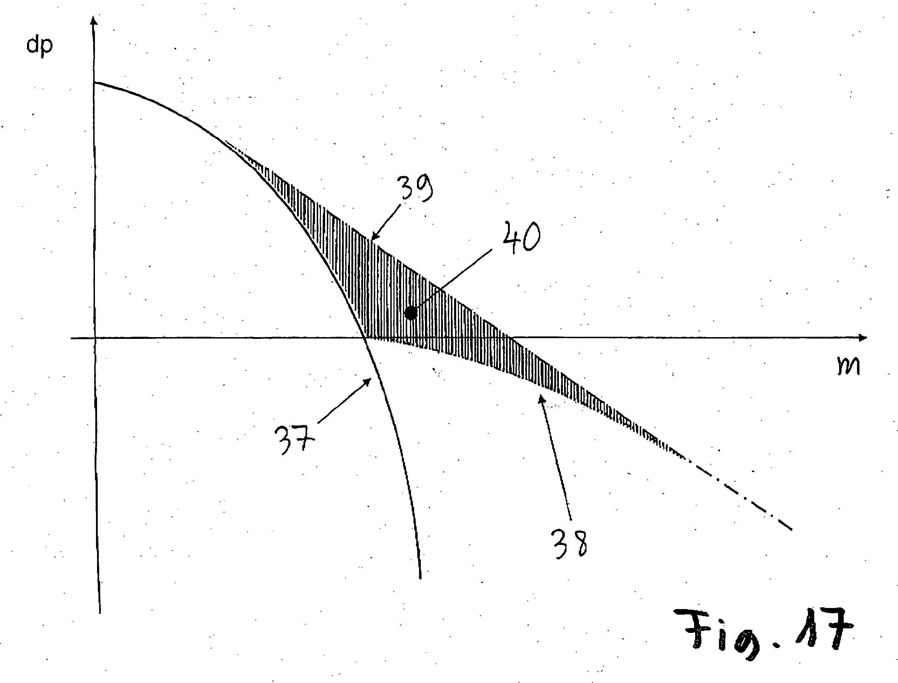

In Figur 17 ist in einem kartesischen Koordinatendiagramm die Druckdifferenz dp über dem Massenstrom m in Form von verschiedenen Kennlinien 37, 38 und 39 dargestellt. Mit 37 ist eine Lüfterkennlinie ohne Staudruckklappen bezeichnet. Mit 38 ist eine Lüfterkennlinie mit herkömmlichen Staudruckklappen bezeichnet. Mit 39 ist eine Lüfterkennlinie mit relativ fein geteilten Staudruckklappen bezeichnet. Der durch die Erfindung erzielbare Massenstromgewinn ist durch ein schraffiertes Feld 40 angedeutet.

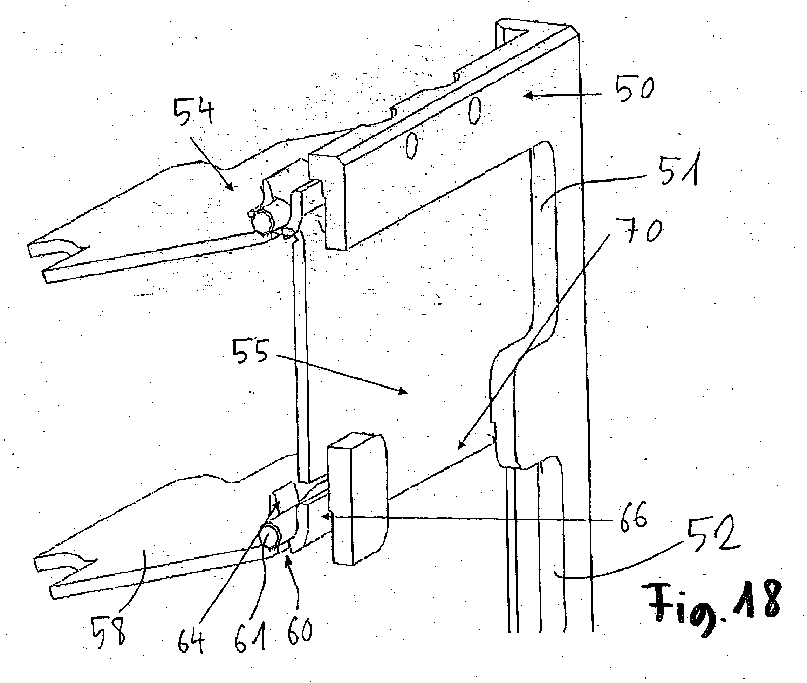

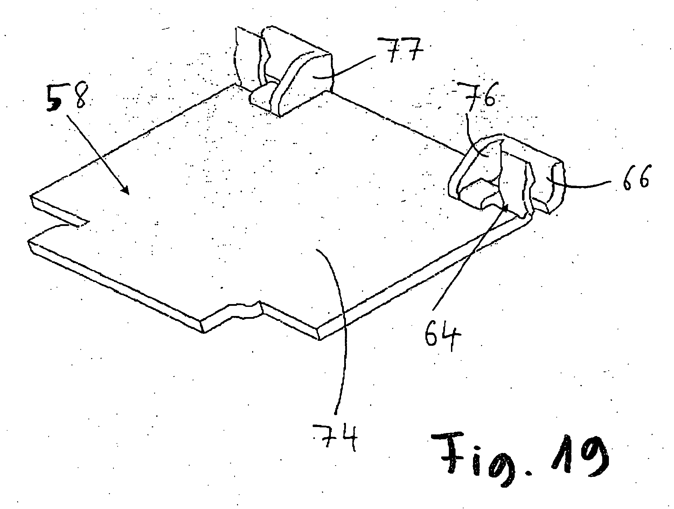

In den Figuren 18 und 19 ist eine mögliche Ausführung der Staudruckklappen perspektivisch dargestellt. In Figur 18 sieht man einen Teil eines Rahmens 50, der als separates Bauteil ausgeführt oder einstückig mit der Lüfterhaube ausgeführt sein kann. Der Rahmen 50 umfasst mehrere Öffnungen 51, 52, denen jeweils eine Staudruckklappe zugeordnet ist und die miteinander so verbunden sind, dass sie eine gemeinsame Öffnung in dem Rahmen 50 bilden, die den ungehinderten Durchtritt von Luft ermöglichen, wenn die zugehörigen Staudruckklappen geöffnet sind. Mit 54 ist die der Öffnung 51 zugeordnete Staudruckklappe im geöffneten Zustand bezeichnet. Mit 55 ist dieselbe Staudruckklappe im geschlossenen Zustand bezeichnet. Mit 58 ist die der Öffnung 52 zuordnete Staudruckklappe im geöffneten Zustand bezeichnet.

Die Staudruckklappe 58 ist, genauso wie die Staudruckklappe 54, 55, mit Hilfe einer Schnappverbindung 60 an einer Scharnierachse 61 schwenkbar angebracht. Die Scharnierachse 61 wird von einem Bolzen gebildet, der an dem Rahmen 50 befestigt ist. Die Schnappverbindung 60 umfasst einen Schnapphaken 64, der einstückig mit der Staudruckklappe 58 verbunden ist. Gegenüber dem Schnapphaken 64 umgreift ein umgebogenes Randstück 66 der Staudruckklappe 58 die Scharnierachse 61. Das Randstück 66 bildet gleichzeitig ein Anschlagelement, das die Öffnungsbewegung der Staudruckklappe 58 begrenzt. Der Anschlag 66 ist vorzugsweise so ausgeführt, dass der Öffnungswinkel der Staudruckklappe 58 maximal 75 Grad beträgt. Dadurch wird verhindert, dass sich die Staudruckklappe 58 senkrecht zu dem Rahmen 50 stellen kann. Dadurch wird die aerodynamische Stabilität verbessert.

In Figur 19 ist die Staudruckklappe 58 allein perspektivisch dargestellt. Die Staudruckklappe 58 ist vorzugsweise als Spritzgussteil aus Kunststoff gebildet. In Figur 19 sieht man, dass der Schnapphaken 64 und das gegenüber liegende Randstück 66 der Staudruckklappe 58 eine Aufnahme für die Scharnierachse (61 in Figur 18) schafft. Diese Aufnahme wird in, bezogen auf die Scharnierachse, axialer Richtung durch eine Endwand 76 begrenzt, die einstückig mit der Staudruckklappe 58 verbunden ist. Mit 77 ist eine weitere Endwand bezeichnet, die an dem entgegengesetzten Ende der scharnierseitigen Längsseite der Staudruckklappe 58 vorgesehen ist. An jeder der Staudruckklappen 58 sind zwei Aufnahmen für jeweils eine Scharnierachse vorgesehen. Die Montage der Staudruckklappe 58 erfolgt durch Aufclipsen auf die Scharnierachsen.

Die in Figur 19 dargestellte Staudruckklappe 58 mit den integrierten Schnappverbindungselementen kann mit einem relativ einfachen Werkzeug ohne Schieber im Spritzgussverfahren hergestellt werden. Im eingebauten Zustand dichten die Staudruckklappen an einer Überlappungsstelle 70 (in Figur 18) in, bezogen auf den Rahmen, vertikaler Richtung aufeinander ab, so dass auf Stege zwischen den Klappen verzichtet werden kann. Dadurch wird nur eine große Öffnung geschaffen, die im geöffneten Zustand der Staudruckklappen nur eine geringe Versperrung für den durchgeführten Luftstrom darstellt. Die Staudruckklappen, die auch kurz als Klappen bezeichnet werden, sind relativ klein, um eine optimale Öffnung zu erreichen, die sich nach den lokalen Druckverhältnissen richtet.

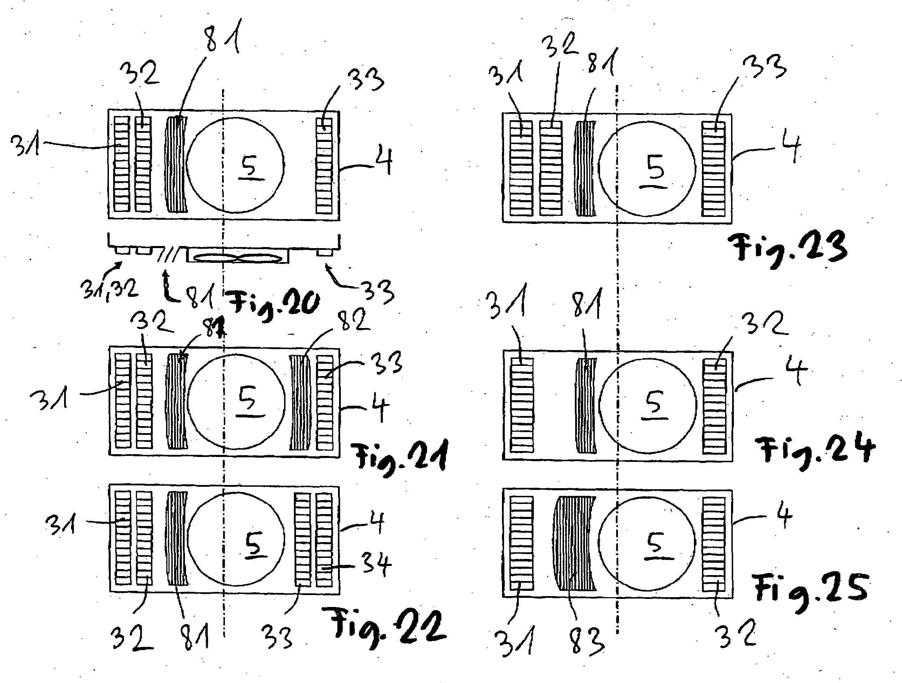

In den Figuren 20 bis 22 sind ähnliche Ausführungsbeispiele wie in den Figuren 15 und 16 dargestellt. Um Wiederholungen zu vermeiden, wird auf die vorangegangene Beschreibung der Figuren 15 und 16 verwiesen. Im Folgenden wird hauptsächlich auf die Unterschiede zwischen den einzelnen Ausführungsbeispielen hingewiesen.

Bei dem in Figur 20 dargestellten Ausführungsbeispiel ist im Unterschied zu dem in Figur 15 dargestellten Ausführungsbeispiel zwischen dem Lüfter 5 und dem Staudruckklappenfeld 32 ein Rückschlaglamellenfeld 81 mit feststehenden Rückschlaglamellen angeordnet. Das Rückschlaglamellenfeld 81 ist teilweise im lüfternahen Bereich angeordnet.

Bei dem in Figur 21 dargestellten Ausführungsbeispiel ist zusätzlich zu dem Rückschlaglamellenfeld 81 ein weiteres Rückschlaglamellenfeld 82 zwischen dem Lüfter 5 und dem Staudruckklappenfeld 33 angeordnet. Ansonsten sind die in den Figuren 20 und 21 dargestellten Ausführungsbeispiele identisch.

Bei dem in Figur 22 dargestellten Ausführungsbeispiel ist im Unterschied zu dem in Figur 16 dargestellten Ausführungsbeispiel zwischen dem Lüfter 5 und dem Staudruckklappenfeld 32 ein Rückschlaglamellenfeld 81 mit feststehenden Rückschlaglamellen angeordnet.

Das in Figur 23 dargestellte Ausführungsbeispiel ähnelt dem in Figur 13 dargestellten Ausführungsbeispiel. Gleiche Teile sind mit gleichen Bezugszeichen versehen. Um Wiederholungen zu vermeiden, wird auf die vorangegangene Beschreibung der Figur 13 verwiesen. Im Folgenden wird hauptsächlich auf die Unterschiede zwischen den einzelnen Ausführungsbeispielen eingegangen.

Bei dem in Figur 23 dargestellten Ausführungsbeispiel ist im Unterschied zu dem in Figur 13 dargestellten Ausführungsbeispiel zwischen dem Lüfter 5 und dem Staudruckklappenfeld 32 ein Rückschlaglamellenfeld 81 mit feststehenden Rückschlaglamellen angeordnet. Ansonsten sind die beiden Ausführungsbeispiele identisch.

Die in den Figuren 24 und 25 dargestellten Ausführungsbeispiele ähneln dem in Figur 14 dargestellten Ausführungsbeispiel. Zur Bezeichnung gleicher Teile werden die gleichen Bezugszeichen verwendet. Um Wiederholungen zu vermeiden, wird auf die vorangegangene Beschreibung der Figur 14 verwiesen. Im Folgenden wird hauptsächlich auf die Unterschiede zwischen den einzelnen Ausführungsbeispielen eingegangen.

Bei dem in Figur 24 dargestellten Ausführungsbeispiel ist im Unterschied zu dem in Figur 14 dargestellten Ausführungsbeispiel zwischen dem Lüfter 5 und dem Staudruckklappenfeld 31 ein Rückschlaglamellenfeld 81 angeordnet. Bei dem in Figur 25 dargestellten Ausführungsbeispiel ist im Unterschied zu dem in Figur 24 dargestellten Ausführungsbeispiel ein etwas größeres Rückschlaglamellenfeld 83 zwischen dem Lüfter 5 und dem Staudruckklappenfeld 31 angeordnet.

Die Rückschlaglamellenfelder 81 bis 83 sind bei den in den Figuren 20 bis 25 dargestellten Ausführungsbeispielen teilweise im lüfternahen Bereich angeordnet. Die Rückschlaglamellenfelder 81 bis 83 umfassen jeweils mehrere Rückschlaglamellen, die feststehend ausgeführt sind und eine Durchströmung nur in einer Richtung zulassen. In der anderen Richtung wird eine Durchströmung durch die feststehenden Rückschlaglamellen verhindert, da diese, zumindest teilweise, biegsam gestaltet sind.

## Patentansprüche

1. Kühlmodul für ein Kraftfahrzeug, mit einem Kühler (3), der von Kühlmittel durchflossen wird, das insbesondere zur Kühlung eines Motors (1) dient, und der von einer Kühlluftströmung durchströmt wird, die, in Ahängigkeit von der Geschwindigkeit des Kraftfahrzeugs, von einem Lüfter (5) beeinflusst wird, der zwischen dem Kühler (3) und dem Motor (1) anzuordnen ist und in beziehungsweise an einer Lüfterhaube (4) angeordnet ist, die Öffnungen (51,52) aufweist, die druckabhängig durch Staudruckklappen (21-29;54,58) verschließbar sind, **dadurch gekennzeichnet, dass** die Lüfterhaube (4) in einem lüfternahen Bereich (10) mindestens einen staudruckklappenfreien Haubenabschnitt aufweist, wobei der lüfternahe Bereich (10) die Gestalt eines Kreisrings aufweist, der sich ringsum den Lüfter (5) erstreckt und wobei der Abstand zwischen einem Innendurchmesser und einem Außendurchmesser des lüfternahen Bereichs (10) so groß wie die Abmessung einer der Staudruckklappen (21-29;54,58) in der gleichen Richtung ist.

2. Kühlmodul nach einem der vorhergehenden Ansprüche, **dadurch gekennzeichnet, dass** der gesamte lüfternahe Bereich (10) geschlossen ausgeführt ist.

3. Kühlmodul nach einem der vorhergehenden Ansprüche, **dadurch gekennzeichnet, dass** alle Staudruckklappen (21-29;54,58) gleich ausgeführt sind.

4. Kühlmodul nach einem der vorhergehenden Ansprüche, **dadurch gekennzeichnet, dass** eine Vielzahl von gleichen Staudruckklappen (21-29;54,58) in insbesondere unterschiedlichen Staudruckklappenfeldern (31-36) angeordnet ist.

5. Kühlmodul nach Anspruch 4, **dadurch gekennzeichnet, dass** die Staudruckklappenfelder (31-36) unterschiedlich groß sind.

6. Kühlmodul nach Anspruch 4 oder 5, **dadurch gekennzeichnet, dass** die Staudruckklappenfelder (31-36) asymmetrisch in der Lüfterhaube (4) angeordnet sind.

7. Kühlmodul nach einem der Ansprüche 4 bis 6, **dadurch gekennzeichnet, dass** jedes Staudruckklappenfeld (31-36) einen Rahmen (50) aufweist, der mehrere Öffnungen (51,52) umfasst, die durch Staudruckklappen (54,58) verschließbar sind.

8. Kühlmodul nach Anspruch 7, **dadurch gekennzeichnet, dass** der Rahmen (50) einstückig mit der Lüfterhaube (4) verbunden ist.

9. Kühlmodul nach einem der vorhergehenden Ansprüche, **dadurch gekennzeichnet, dass** die Staudruckklappen (54,58) durch Schnappverbindungen (60) schwenkbar an Scharnierachsen (61) angebracht sind, die an dem Rahmen (50) befestigt sind.

10. Kühlmodul nach Anspruch 9, **dadurch gekennzeichnet, dass** die Schnappverbindungen (60) jeweils mindestens einen Schnapphaken (64) umfassen, der von der zugehörigen Staudruckklappe (58) ausgeht.

11. Kühlmodul nach einem der vorhergehenden Ansprüche, **dadurch gekennzeichnet, dass** die Staudruckklappen (54,58) im geschlossenen Zustand überlappend aneinander anliegen.

## Claims

1. A cooling module for a motor vehicle, comprising a cooled (3) through which a coolant flows that is used in particular for cooling an engine (1), and through which a cooling air current flows that is influenced by a fan (5) as a function of the speed of the motor vehicle, the fan to be disposed between the cooler (3) and the engine (1) and in or on a fan cowl (4) having openings (51, 52), which can be closed by ram pressure flaps (21-29; 54, 58) as a function of pressure, **characterized in that** the fan cowl (4) has at least one cowl section that is free of ram pressure flaps in a region (10) close to the fan, the region (10) close to the fan having the shape of a circular ring, which extends peripherally around the fan (5), and the distance between an inner diameter and an outer diameter of the region (10) close to the fan being as large as the dimension of one of the ram pressure flaps (21-29; 54, 58) in the same direction.

2. A cooling module according to any one of the preceding claims, **characterized in that** the entire region (10) close to the fan is designed to be closed.

3. A cooling module according to any one of the preceding claims, **characterized in that** all the ram pressure flaps (21-29; 54, 58) are designed identically.

4. A cooling module according to any one of the preceding claims, **characterized in that** a plurality of identical ram pressure flaps (21-29; 54, 58) are disposed in particular in different ram pressure flap fields (31-36).

5. The cooling module according to claim 4, **characterized in that** the ram pressure flap fields (31-36) differ from each other in size.

6. The cooling module according to claim 4 or 5, **characterized in that** the ram pressure flap fields (31-36) are disposed asymmetrically in the fan cowl (4).

7. A cooling module according to any one of claims 4 to 6, **characterized in that** each ram pressure flap field (31-36) comprises a frame (50) having multiple openings (51, 52), which can be closed by ram pressure flaps (54, 58).

8. The cooling module according to clam 7, **characterized in that** the frame (50) is integrally jointed to the fan cowl (4).

9. A cooling module according to any one of the preceding claims, **characterized in that** the ram pressure flaps (54, 58) are pivotably attached to hinge shafts (61) by way of snap-fit connections (60), the shafts being fastened to the frame (50).

10. The cooling module according to claim 9, **characterized in that** each of the snap-fit connections (60) comprises a snap hook (64), which extends from the associated ram pressure flap (58).

11. A cooling module according to any one of the preceding claims, **characterized in that** the ram pressure flaps (54, 58) are seated against one another in an overlapping manner when they are closed.

## Revendications

1. Module de refroidissement pour un véhicule automobile, comprenant un radiateur (3) qui est traversé par un liquide de refroidissement qui sert en particulier au refroidissement d'un moteur (1), et qui est traversé par un écoulement d'air de refroidissement qui, en fonction de la vitesse du véhicule automobile, est influencé par un ventilateur (5) qui doit être disposé entre le radiateur (3) et le moteur (1) et qui est disposé plutôt sur un capot de ventilateur (4) qui présente des ouverture (51, 52) qui, en fonction de la pression, peuvent être fermées par des volets de pression dynamique (21 - 29 ; 54, 58), **caractérisé en ce que** le capot de ventilateur (4), dans une zone (10) située à proximité du ventilateur, présente au moins une partie de capot ne comportant aucun volet de pression dynamique, où la zone (10) située à proximité du ventilateur présente la forme d'un anneau circulaire qui s'étend tout autour du ventilateur (5) et où la distance comprise entre un diamètre intérieur et un diamètre extérieur de la zone (10) située à proximité du ventilateur est aussi grande que la dimension de l'un des volets de pression dynamique (21 - 29; 54, 58) placé dans la même direction.

2. Module de refroidissement selon la revendication 1, **caractérisé en ce que** la totalité de la zone (10) située à proximité du ventilateur est configurée en étant fermée.

3. Module de refroidissement selon l'une ou l'autre des revendications précédentes, **caractérisé en ce que** tous les volets de pression dynamique (21 - 29; 54, 58) sont conçus de façon identique.

4. Module de refroidissement selon l'une quelconque des revendications précédentes, **caractérisé en ce qu'**une multitude de volets de pression dynamique identiques (21 - 29; 54, 58) est disposée en particulier dans différents champs de volets de pression dynamique (31 - 36).

5. Module de refroidissement selon la revendication 4, **caractérisé en ce que** les champs de volets de pression dynamique (31 - 36) sont de tailles différentes.

6. Module de refroidissement selon la revendication 4 ou 5, **caractérisé en ce que** les champs de volets de pression dynamique (31 - 36) sont disposés de façon asymétrique dans le capot de ventilateur (4).

7. Module de refroidissement selon l'une quelconque des revendications 4 à 6, **caractérisé en ce que** chaque champ de volets de pression dynamique (31 - 36) présente un cadre (50) qui comporte plusieurs ouvertures (51, 52) qui peuvent être fermées par des volets de pression dynamique (54, 58).

8. Module de refroidissement selon la revendication 7, **caractérisé en ce que** le cadre (50) est assemblé en formant une seule et même pièce avec le capot de ventilateur (4).

9. Module de refroidissement selon l'une quelconque des revendications précédentes, **caractérisé en ce que** les volets de pression dynamique (54, 58) sont montés en pouvant pivoter sur des axes charnières (61) grâce à des assemblages à encliquetage (60), axes charnières qui sont fixés sur le cadre (50).

10. Module de refroidissement selon la revendication 9, **caractérisé en ce que** les assemblages à encliquetage (60) comprennent à chaque fois au moins une patte d'encliquetage (64) qui part du volet de pression dynamique respectif (58).

11. Module de refroidissement selon l'une quelconque des revendications précédentes, **caractérisé en ce que** les volets de pression dynamique (54, 58), quand ils sont fermés, sont en appui l'un contre l'autre en se chevauchant.
